# FASCICULE DE BREVET EUROPEEN

(11) **EP 4 096 941 B1**
(45) Date de publication et mention de la délivrance du brevet: **05.03.2025**
(21) Numéro de dépôt: 21700595.8
(22) Date de dépôt: 19.01.2021
(51) Int. Cl.: B60D 1/66, A61G 5/04, B60S 9/16

(54) **DISPOSITIF D'ATTELAGE DE DEUX VEHICULES**
VORRICHTUNG ZUM KOPPELN ZWEIER FAHRZEUGE
DEVICE FOR COUPLING TWO VEHICLES

(30) Priorité: 29.01.2020 FR 2000856
(43) Date de publication de la demande: 07.12.2022
(73) Titulaire: OMNI, 92120 Montrouge (FR)
(72) Inventeur: IZAUTE, Mathieu Adrien, 75020 PARIS (FR); LHOMMEAU, Robin Terence, 75017 PARIS (FR); RICHARD, Sulivan Boris Christian, 93160 SAINT-MANDE (FR)
(74) Mandataire: Cabinet Boettcher
(86) Numéro de dépôt international: PCT/EP2021/050984
(87) Numéro de publication internationale: WO 2021/151714

(56) Documents cités:
- EP-A1- 0 629 390
- FR-A1- 3 037 311
- KR-A- 20160 000 078

## Description

La présente invention se rapporte au domaine des dispositifs d'attelage adaptés à être assemblés sur un véhicule, par exemple une trottinette, pour atteler un objet tel qu'un autre véhicule, comme un fauteuil roulant à propulsion manuelle. Le document EP0629390A1 présente un dispositif similaire.

Le document US9757290B1 présente une trottinette dotée d'au moins une roue motorisée et un dispositif d'attelage assemblé sur cette trottinette.

Ce dispositif d'attelage est prévu pour atteler un fauteuil roulant à propulsion manuelle à cette trottinette.

Le dispositif d'attelage comporte une ouverture en forme de U qui est orientée vers le haut afin de recevoir une traverse avant du fauteuil roulant. La traverse avant est bloquée dans l'ouverture en forme de U par un moyen de blocage qui s'oppose à son extraction hors de l'ouverture de ce dispositif d'attelage.

Ce type de dispositif d'attelage n'est pas évident à manœuvrer par l'utilisateur placé sur le fauteuil car il nécessite de positionner une traverse tubulaire basse de la structure tubulaire du fauteuil dans l'ouverture en forme de U tout en maintenant la trottinette en équilibre.

Il serait par conséquent utile de développer un dispositif d'attelage adapté à être assemblé sur un véhicule, comme une trottinette, pour faciliter l'attelage de ce véhicule avec un autre objet tels qu'un autre véhicule.

### OBJET DE L'INVENTION

Un objet de la présente invention est de fournir un dispositif d'attelage adapté à être porté par un véhicule pour atteler ce véhicule à un autre véhicule tout en résolvant certains au moins des problèmes précités de l'art antérieur.

### RESUME DE L'INVENTION

A cet effet, suivant un premier aspect, l'invention concerne un dispositif d'attelage pour atteler entre eux des premier et second véhicules, le dispositif d'attelage comprenant au moins un mécanisme d'attelage et au moins une première pièce d'attelage externe au mécanisme d'attelage, le dispositif d'attelage étant agencé pour sélectivement adopter une configuration attelée et une configuration dételée, dans la configuration attelée le mécanisme d'attelage est relié mécaniquement à ladite première pièce d'attelage externe et interdit l'écartement de cette première pièce d'attelage externe vis-à-vis du mécanisme d'attelage, dans la configuration dételée, la première pièce d'attelage externe est éloignée dudit mécanisme d'attelage.

Ce dispositif d'attelage selon l'invention est essentiellement caractérisé en ce qu'il comporte également une première béquille mobile par rapport au mécanisme d'attelage entre une position d'utilisation de la première béquille et une position de rangement de la première béquille et un premier mécanisme de commande de déplacement de la première béquille agencé pour commander le déplacement de cette première béquille de sa position d'utilisation vers sa position de rangement lorsque le dispositif d'attelage passe de sa configuration dételée vers sa configuration attelée.

En d'autres termes, lorsque le dispositif d'attelage passe de sa configuration dételée vers sa configuration attelée, ce mécanisme d'attelage commande le déplacement de la première béquille de sa position d'utilisation vers sa position de rangement. En d'autres termes, le premier mécanisme de commande de déplacement de la première béquille est agencé pour provoquer le passage de cette première béquille de sa position d'utilisation vers sa position de rangement en réponse au passage du dispositif d'attelage de sa configuration dételée vers sa configuration attelée.

Ceci est particulièrement utile pour l'utilisateur puisqu'il n'a pas à se préoccuper de ranger la béquille, celle-ci se rangeant automatiquement sous l'effet du mécanisme d'attelage qui passe de sa configuration dételée vers sa configuration attelée.

L'opérateur peut se concentrer sur la manœuvre nécessaire à l'attelage de ces deux véhicules via le mécanisme d'attelage de l'invention sans avoir à se préoccuper de l'équilibre du véhicule portant le mécanisme d'attelage.

Lorsque le véhicule portant le mécanisme d'attelage est dételé, la première béquille est alors en position d'utilisation et elle maintient le véhicule portant le mécanisme d'attelage dans une position stable sur le sol qui le porte.

Le véhicule ainsi stabilisé est plus simplement attelable.

Une fois l'attelage réalisé entre ces véhicules, l'utilisateur n'a pas à vérifier que la première béquille est bien rangée et que les véhicules attelés sont ainsi en mesure d'être déplacés ensemble. En effet, grâce au dispositif d'attelage selon l'invention, c'est l'opération d'attelage qui provoque le passage de cette première béquille de sa position d'utilisation vers sa position de rangement.

Selon un mode de réalisation préférentiel, le premier mécanisme de commande de déplacement de la première béquille est également agencé pour commander le déplacement de la première béquille de sa position de rangement vers sa position d'utilisation lorsque le dispositif d'attelage passe de sa configuration attelée vers sa configuration dételée.

En d'autres termes, lorsque le dispositif d'attelage passe de sa configuration attelée vers sa configuration dételée, ce mécanisme d'attelage commande le déplacement de la première béquille de sa position de rangement vers sa position d'utilisation. En d'autres termes, le premier mécanisme de commande de déplacement de la première béquille est agencé pour provoquer le passage de cette première béquille de sa position de rangement vers sa position d'utilisation en réponse au passage du dispositif d'attelage de sa configuration attelée vers sa configuration dételée.

Ceci est particulièrement utile pour l'utilisateur puisqu'il n'a pas à se préoccuper de déployer la béquille pour stabiliser le véhicule portant le mécanisme d'attelage, cette béquille passant automatiquement de sa position de rangement (position dans laquelle la béquille est écartée du sol pour permettre le déplacement libre du véhicule) vers sa position d'utilisation dans laquelle la béquille stabilise le véhicule portant le mécanisme d'attelage.

Le passage de la première béquille de sa position de rangement vers sa position d'utilisation se fait sous l'effet du mécanisme d'attelage lorsque ce mécanisme d'attelage passe de sa configuration attelée vers sa configuration dételée.

Ainsi, l'opération de dételage du véhicule portant le mécanisme d'attelage vis-à-vis de l'autre véhicule est simplifiée puisque ce véhicule portant le mécanisme d'attelage est stabilisé automatiquement sous l'effet de l'opération de dételage.

L'utilisateur peut ainsi se concentrer sur la seule manœuvre nécessaire au dételage des premier et second véhicules sans avoir à se préoccuper de la position de la première béquille.

Idéalement, le dispositif d'attelage selon l'invention comporte aussi une seconde béquille mobile par rapport au mécanisme d'attelage entre une position d'utilisation de la seconde béquille et une position de rangement de la seconde béquille et le premier mécanisme de commande de déplacement de la première béquille étant également agencé pour commander le déplacement de cette seconde béquille de sa position d'utilisation vers sa position de rangement lorsque le dispositif d'attelage passe de sa configuration dételée vers sa configuration attelée.

En d'autres termes, le premier mécanisme de commande de déplacement de la première béquille est agencé pour commander le déplacement de la seconde béquille de sa position d'utilisation vers sa position de rangement sous l'effet du passage du dispositif d'attelage de sa configuration dételée vers sa configuration attelée.

La combinaison des première et seconde béquilles permet d'améliorer la stabilité du véhicule tout en facilitant l'opération de rangement de ces béquilles qui passent automatiquement vers leurs positions de rangement lorsque les véhicules sont dételés l'un de l'autre.

De manière corolaire, dans lequel le premier mécanisme de commande de déplacement de la première béquille est également agencé pour commander le déplacement de la seconde béquille de sa position de rangement vers sa position d'utilisation lorsque le dispositif d'attelage passe de sa configuration attelée vers sa configuration dételée.

En d'autres termes, le premier mécanisme de commande de déplacement de la première béquille est agencé pour commander le déplacement de la seconde béquille de sa position de rangement vers sa position d'utilisation sous l'effet du passage du dispositif d'attelage de sa configuration attelée vers sa configuration dételée.

Ceci facilite grandement la stabilisation du véhicule portant le mécanisme d'attelage tant que celui-ci n'est pas encore attelé tout en permettant à l'utilisateur d'atteler les véhicules sans avoir à se préoccuper de la position de ces deux béquilles.

Idéalement, ces première et seconde béquilles se déplacent ensemble de leurs positions d'utilisation vers leurs positions de rangement et inversement de leurs positions de rangement vers leurs positions d'utilisation.

Selon un autre aspect de l'invention, il est proposé un ensemble comportant un second véhicule et un dispositif d'attelage selon l'un quelconque des modes de réalisation du dispositif d'attelage selon l'invention.

Ce mécanisme d'attelage étant porté par ledit second véhicule de manière que :
- lorsque le dispositif d'attelage est dans sa configuration dételée, ce second véhicule est alors maintenu en position stable par rapport à un sol portant ce second véhicule à l'aide de ladite première béquille qui est portée par ce second véhicule et qui se trouve dans sa position d'utilisation, en appui sur le sol ; et que
- lorsque le dispositif d'attelage est dans sa configuration attelée, ce second véhicule est alors attelé à ladite première pièce externe et ladite première béquille se trouvant alors dans sa position de rangement où elle est éloignée du sol.

Cet ensemble selon l'invention présente les avantages précités relatifs et dispositif d'attelage selon l'invention.

Préférentiellement, cet ensemble comporte aussi un premier véhicule comportant au moins une paire de roues arrières et au moins une roue avant, ladite première pièce externe étant fixée sur ce premier véhicule.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

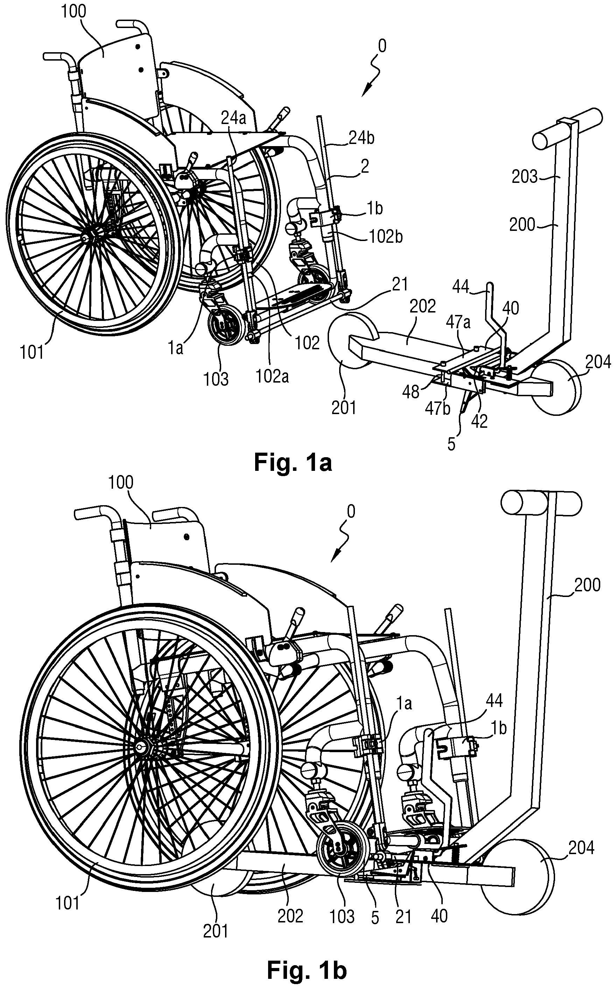

[Fig. 1a] la figure 1a représente un ensemble selon l'invention comprenant le dispositif d'attelage 0 selon l'invention, un premier véhicule 100 qui est ici un fauteuil roulant 100 et un second véhicule 200 qui est ici une trottinette motorisée via un moteur roue électrique 201, ce second véhicule 200 portant le mécanisme d'attelage 40 et le premier véhicule 100 portant la première pièce externe 21 (ici une barre transversale 21), le dispositif d'attelage 0 étant en configuration dételée (en configuration dételée, la pièce externe 21 est éloignée du mécanisme d'attelage) et la première béquille 5 étant en position d'utilisation pour maintenir le second véhicule 200 dans une position stable sur le sol ;
[Fig. 1b] la figure 1b représente le dispositif d'attelage 0 de la figure 1a alors qu'il est placé dans sa configuration d'attelage dans laquelle la barre transversale 21 (portée par une structure détachable 2 assemblée sur le fauteuil 100) est reliée mécaniquement au mécanisme d'attelage 40 qui est ici porté de manière amovible sur la trottinette 200, dans cette configuration d'attelage, la béquille est maintenue en position de rangement et le passager peut facilement manœuvrer et propulser son fauteuil grâce à la roue motorisée 201;

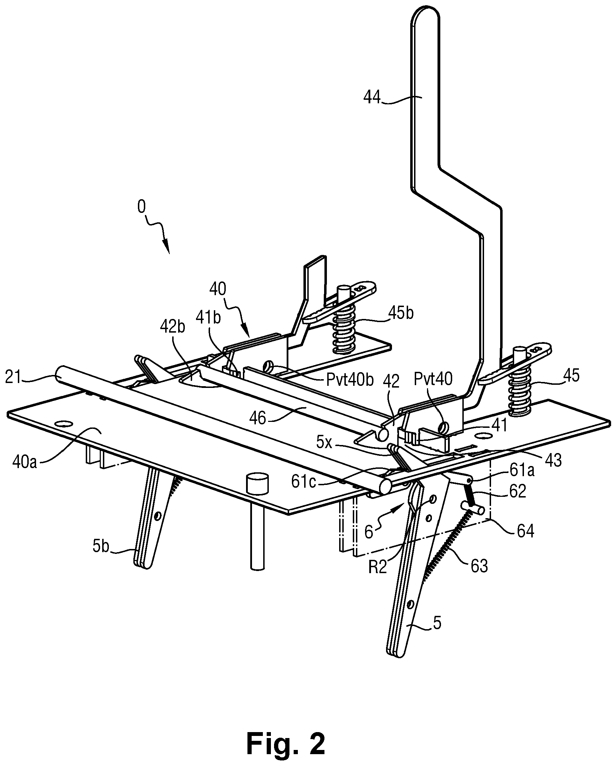

[Fig. 2] la figure 2 représente le dispositif d'attelage 0 selon l'invention alors que son mécanisme d'attelage 40 et sa première pièce externe 21 qui est une barre 21 sont détachés l'un de l'autre, ce dispositif d'attelage 0 étant dans sa configuration dételée avec les première et seconde béquilles 5, 5b respectivement placées dans leurs positions d'utilisation respectives ;

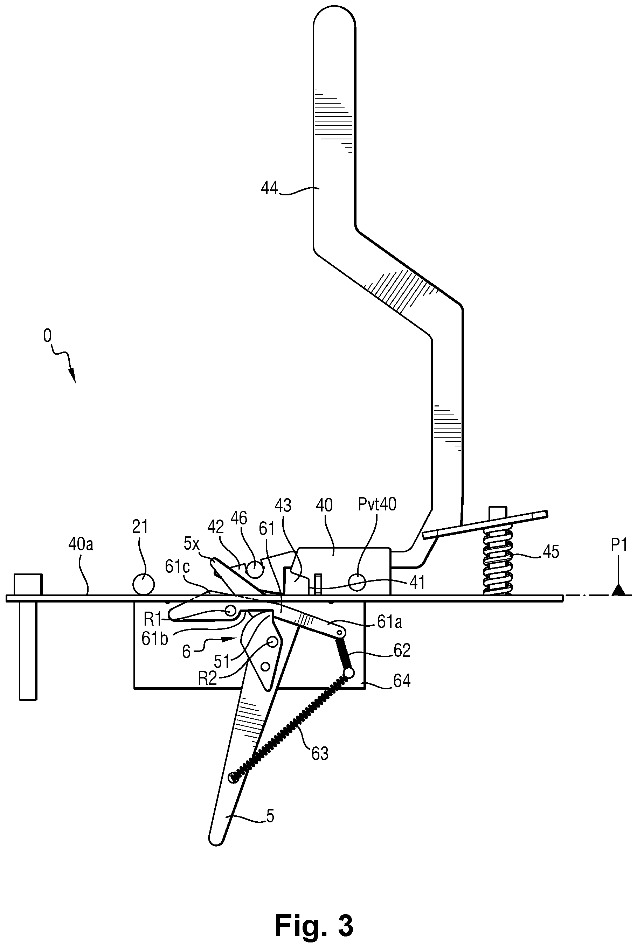

[Fig. 3] la figure 3 représente le dispositif d'attelage 0 selon l'invention alors que son mécanisme d'attelage 40 et sa première pièce externe 21 sont attachés l'un à l'autre, ce dispositif d'attelage 0 étant dans sa configuration attelée avec les première et seconde béquilles 5, 5b placées dans leurs positions de rangement respectives (sur cette figure 3, seule la première béquille 5 est visible, la seconde béquille 5b étant ici cachée par la première béquille 5 ;

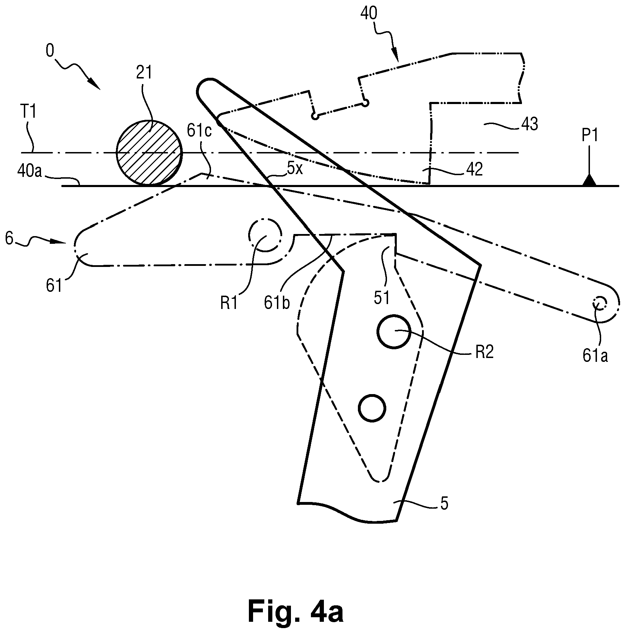

[Fig. 4a] la figure 4a représente une zone de détail du dispositif d'attelage 0 selon l'invention alors qu'il est en configuration dételée, la barre 21 étant en guidée en déplacement par une surface de guidage 40a le long d'une trajectoire T1, cette barre se déplaçant en direction de premier et second espaces de réception 43, 43b, les béquilles 5, 5b étant dans leurs positions d'utilisation respectives où elles sont maintenues bloquées par un premier verrou 61 qui est en position de verrouillage ;

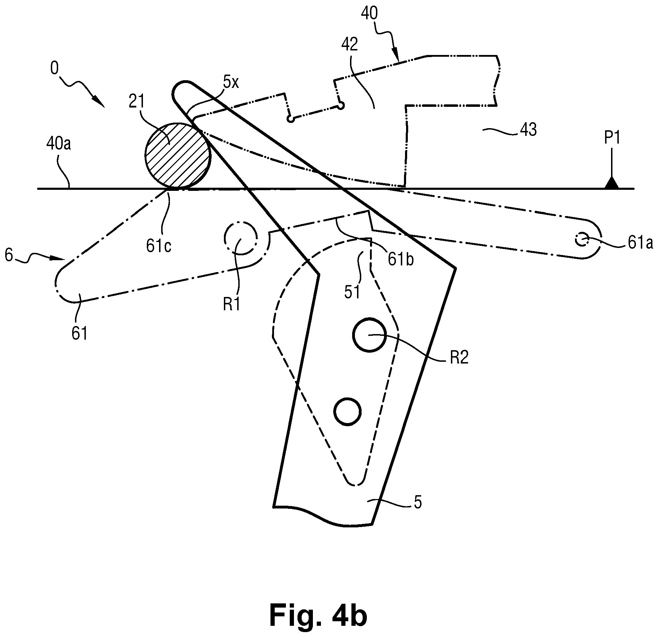

[Fig. 4b] la figure 4b représente la zone de détail du dispositif d'attelage 0 illustrée à la figure 4a alors que ce dispositif d'attelage 0 est en configuration dételée, mais la barre 21 qui est déplacée le long de la trajectoire T1, cette barre étant en contact contre une portion 61c du premier verrou 61 qui est poussée par la barre 21 dans sa position de libération, les béquilles 5, 5b étant toujours positionnées dans leurs positions d'utilisation respectives, mais elles sont ici déverrouillées ;

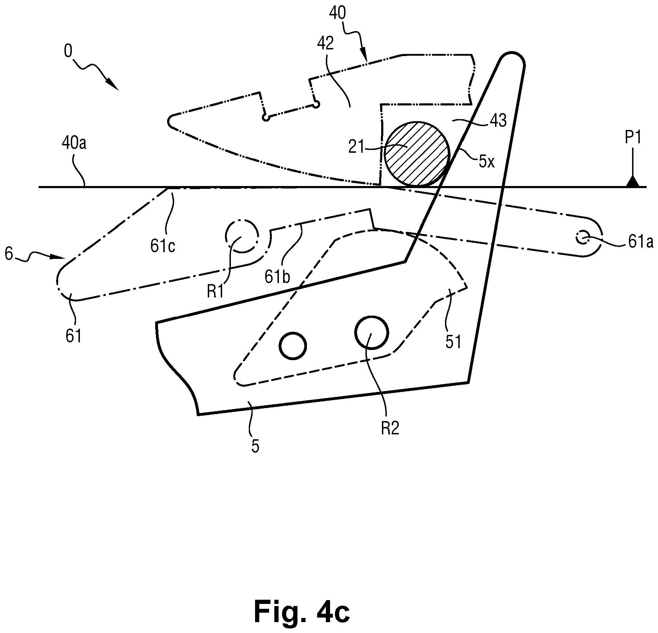

[Fig. 4c] la figure 4c représente la zone de détail du dispositif d'attelage 0 illustrée aux figures 4a et 4b alors que ce dispositif d'attelage 0 est en configuration attelée, la barre 21 étant positionnée dans les premier et second espaces de réception 43, 43b, cette barre étant ici maintenue dans ces premier et second espace 43, 43b sous l'effet de crochets 42, 42b qui appartiennent au mécanisme d'attelage 40, la barre 21 étant toujours en contact contre la portion 61c du premier verrou 61 qui est maintenu par la barre 21 dans sa position de libération, les béquilles 5, 5b étant toujours positionnées dans leurs positions de rangement respectives sous l'effet de la barre 21 qui est bloquée à l'intérieur desdits premier et second espace 43, 43b.

### DESCRIPTION DETAILLEE DE L'INVENTION

Comme indiqué précédemment, la présente invention porte essentiellement sur un dispositif d'attelage 0 pour atteler entre eux des premier et second véhicules 100, 200.

Le premier véhicule est un fauteuil roulant 100 et le second véhicule 200 est une trottinette.

Le second véhicule 200 est un véhicule à deux roue 201, 204, l'une au moins de ces roues 201 pouvant être motorisée pour déplacer ce second véhicule.

Idéalement, ce second véhicule 200 est une trottinette dont l'une de ses roues 204 est une roue directionnelle. Cette trottinette 200 comporte un plateau 202 pour supporter le poids d'un opérateur de ce second véhicule 200.

Le premier véhicule 100 peut être un fauteuil roulant que l'on veut atteler / relier au second véhicule 200 comportant une roue motorisée pour tracter le fauteuil 100.

Grâce au dispositif d'attelage 0 selon l'invention, on peut atteler un fauteuil roulant 100 non motorisé à une trottinette motorisée 200 pour tracter ce fauteuil 100.

A cette fin, ce dispositif d'attelage 0 comprend un mécanisme d'attelage 40 et au moins une première pièce externe 21 au mécanisme d'attelage 40 qui est une barre 21.

Le mécanisme d'attelage 40 est fixé, ici de manière amovible, sur le second véhicule 200 qui porte ce mécanisme d'attelage 40.

Dans l'exemple illustré, le mécanisme d'attelage 40 comprend une bride supérieure 47a et une bride inférieure 47b pour assembler ce mécanisme d'attelage 40 sur le second véhicule 200.

En l'occurrence ces brides 47a, 47b sont reliées entre elles via des tirants associés à des systèmes visse écrou de manière à rapprocher ces brides 47a, 47b l'une vers l'autre pour enserrer une partie de la trottinette 200, en l'occurrence son plateau 202, entre ces brides 47a, 47b.

Une surface de guidage 40a de la première pièce externe vis-à-vis du mécanisme d'attelage 40 est ici constituée par une surface supérieure de la bride supérieure 47a.

Toutefois, cette surface de guidage 40a pourrait également être directement formée par une face supérieure du plateau 202 du second véhicule 200. La surface de guidage est ici plane mais elle pourrait avoir la forme d'un rail.

Comme illustré sur les figures 1a et 1b, le dispositif d'attelage 0 peut aussi comporter :
- une interface de fixation 1a, 1b fixée sur une structure dudit premier véhicule 100 (en l'occurrence sur un châssis 102b du premier véhicule 100) ; et
- une structure détachable 2 qui est sélectivement détachable 2 vis-à-vis de l'interface de fixation 1a, 1b, ladite première pièce externe 21 appartenant à cette structure détachable 2.

Cette structure détachable 2 comporte deux tiges latérales 24a, 24b qui permettent de régler une distance d'écartement entre ladite première pièce externe 21 et ladite interface de fixation 1a, 1b qui est fixe sur le premier véhicule 100.

Cette structure détachable 2 est en forme de U et est formée par lesdites tiges latérales 24a, 24b et la première pièce externe 21 en forme de barre 21. La première pièce externe 21 est placée entre ces tiges latérales 24a, 24b pour les relier entre elles.

De même, la première pièce externe 21 est fixée, ici de manière amovible, sur premier véhicule 100 qui porte cette pièce externe 21.

Ici, la première pièce externe 21 en forme de barre 21 s'étend transversalement par rapport à un sens de déplacement du premier véhicule 100.

Cette barre s'étend dans un plan en dessous de reposes pieds de ce premier véhicule 100.

Ainsi, le dispositif d'attelage 0 qui comprend le mécanisme d'attelage 40 et la première pièce externe 21 est en partie porté par le second des véhicules 200 et en partie porté par le premier des véhicules 100.

Le second véhicule 200 est motorisé et adapté à porter au moins un passager, ce passager ayant un complet usage de ses membres inférieurs.

Le premier véhicule 100, en l'occurrence un fauteuil roulant, est adapté à transporter un passager à mobilité réduite installé sur une assise de ce premier véhicule 100.

Grâce au dispositif d'attelage 0 selon l'invention, on peut atteler le premier véhicule sur le second véhicule et une personne à mobilité réduite peut alors utiliser le second véhicule 200 (normalement non compatible pour le transport d'une personne à mobilité réduite) pour tracter le premier véhicule 100 adapté au transport d'une personne à mobilité réduite.

On peut ainsi, à moindre frais, utiliser le second véhicule 200 qui est motorisé pour tracter (entraîner) le premier véhicule 100 qui n'est pas motorisé.

Le dispositif d'attelage 0 est agencé pour sélectivement adopter une configuration attelée illustrée aux figures 1b et 4c et une configuration dételée illustrée aux figures 1a, 2, 3, 4a, 4b.

Dans la configuration attelée le mécanisme d'attelage 40 est relié mécaniquement à ladite première pièce d'attelage 21 et interdit l'écartement de cette première pièce externe 21 vis-à-vis du mécanisme d'attelage 40.

Dans la configuration dételée, la première pièce externe 21 est éloignée dudit mécanisme d'attelage 40 et est par conséquent libre d'être déplacée indépendamment du mécanisme d'attelage 40.

Ce dispositif d'attelage 0 comporte également des première et seconde béquilles 5, 5b chacune mobile par rapport au mécanisme d'attelage 40 entre une position d'utilisation de la béquille 5, 5b et une position de rangement de la béquille 5, 5b.

Le dispositif d'attelage 0 selon l'invention comporte aussi un premier mécanisme de commande de déplacement 6 de ces première et seconde béquilles 5, 5b.

Ce premier mécanisme 6 est agencé pour commander le déplacement de ces béquilles 5, 5b de leurs positions d'utilisation vers leurs positions de rangement lorsque le dispositif d'attelage 0 passe de sa configuration dételée vers sa configuration attelée, c'est-à-dire sous l'effet du passage du dispositif d'attelage 0 de sa configuration dételée vers sa configuration attelée.

Par ailleurs, le premier mécanisme de commande de déplacement 6 des première et seconde béquilles 5, 5b est agencé pour commander le déplacement de ces première et seconde béquilles 5, 5b de leurs positions de rangement vers leurs positions d'utilisation lorsque le dispositif d'attelage 0 passe de sa configuration attelée vers sa configuration dételée, c'est-à-dire sous l'effet du passage du dispositif d'attelage 0 de sa configuration attelée vers sa configuration dételée.

Ainsi, en position dételée, les béquilles 5, 5b sont dans leurs positions d'utilisation respectives pour maintenir le second véhicule 200 en position droite stabilisée par rapport au sol. A cette fin, les béquilles en position d'utilisation s'étendent de part et d'autre d'un plan de symétrie principal du second véhicule 200 pour le maintenir en équilibre stable sur le sol.

En position attelée, les béquilles 5, 5b sont en position de rangement, à l'écart du sol pour permettre aux premier et second véhicules 100, 200 de rouler sur le sol.

La première béquille 5, comme la seconde béquille 5b, est constituée d'une tige montée pivotante par rapport à une platine 64 qui est assujettie au mécanisme d'attelage 40.

En l'occurrence, la première béquille 5 est pivotante autour d'un premier axe R2 de béquille 5 qui est fixe par rapport à ladite platine 64. Il en est de même pour la seconde béquille 5b.

Le premier mécanisme de commande de déplacement 6 de la première béquille 5 comporte aussi un moyen élastique de rappel 63 de la première béquille 5 de sa position de rangement vers sa position d'utilisation. Ce moyen élastique est ici un ressort 63.

Le mécanisme d'attelage 40 et la pièce externe 21 sont conformés de manière que lorsque le dispositif d'attelage 0 est dans la configuration attelée avec le mécanisme d'attelage 40 relié mécaniquement à ladite première pièce d'attelage 21, cette première pièce en forme de barre 21 peut alors pivoter par rapport au mécanisme d'attelage 40 suivant un axe de pivotement s'étendant selon la longueur de cette barre.

On a ainsi un degré de liberté entre les véhicules attelés ce qui améliore sa maniabilité tout en garantissant une transmission optimale des efforts entre la barre 21 et le mécanisme d'attelage 40.

Lorsque le dispositif d'attelage 0 relie les premier et second véhicules l'un à l'autre, c'est-à-dire en configuration attelée, les roues avant directionnelles 103 du premier véhicule 100, en l'occurrence les roues avant 103 du fauteuil roulant, sont écartées d'un plan de roulement sur lequel roulent les roues 201, 204 du second véhicule 200 et une paire de roues arrières 101, 102 du premier véhicule 100.

Comme on le comprend de la figure 2, le mécanisme d'attelage 40 comporte une première butée 41 et un premier crochet 42 monté à rotation autour d'un premier axe pivot Pvt40 du mécanisme d'attelage 40 entre une première position de pivotement atteinte au moins lorsque le dispositif d'attelage 0 est dans sa configuration attelée et une seconde position de pivotement.

Dans la première position de pivotement du premier crochet 42, ce premier crochet 42 est alors positionné pour pouvoir bloquer ladite première pièce externe 21 entre le premier crochet 42 et la première butée 41.

Dans la seconde position de pivotement du premier crochet 42, ce premier crochet 42 est alors positionné pour autoriser une translation libre de ladite première pièce externe 21 par rapport au mécanisme d'attelage 40 en s'écartant de ladite première butée 41.

Le mécanisme d'attelage 40 comporte aussi une seconde butée 41b située à distance de la première butée 41 et un second crochet 42b situé à distance du premier crochet 42.

Ce second crochet 42b est monté à rotation autour d'un second axe pivot Pvt40b du mécanisme d'attelage 40 (le premier axe de pivot Pvt40 et le second axe Pvt40b sont coaxiales entre eux) entre une première position de pivotement de ce second crochet 42b atteinte au moins lorsque le dispositif d'attelage 0 est dans sa configuration attelée et une seconde position de pivotement de ce second crochet 42b.

Dans sa première position de pivotement ce second crochet 42b est positionné pour pouvoir bloquer ladite première pièce externe 21 entre le second crochet 42b et la seconde butée 41b.

Dans la seconde position de pivotement du second crochet 42b, ce second crochet 42b est alors positionné pour autoriser une translation libre de ladite première pièce externe 21 par rapport au mécanisme d'attelage 40 en s'écartant de ladite seconde butée 41b.

Le premier mécanisme de commande de déplacement 6 de la première béquille 5 comporte un organe de manœuvre 44 agencé pour commander le passage du premier crochet 42 de sa première position vers sa deuxième position.

Le mécanisme d'attelage 40 comporte aussi un organe de rappel élastique 45 pour exercer un effort de rappel dudit premier crochet de sa seconde position de pivotement (dans laquelle la pièce externe est libérée) vers sa première position de pivotement (dans laquelle la première pièce externe 21 est coincée entre le premier crochet et la première butée).

De manière similaire, le mécanisme d'attelage comporte aussi un second organe élastique de rappel 45b pour forcer le déplacement dudit second crochet 42b de sa seconde position de pivotement (dans laquelle la pièce externe 21 est libérée) vers sa première position de pivotement (dans laquelle la première pièce externe 21 est coincée entre le second crochet 42b et la seconde butée 41b).

Le mécanisme d'attelage 40 comporte aussi un organe de manœuvre 44 agencé pour commander le passage de ladite configuration attelée vers ladite configuration dételée.

L'organe de manœuvre 44 est un organe de manœuvre manuel, c'est-à-dire agencé pour être actionné manuellement par l'utilisateur.

En l'occurrence, lorsque l'utilisateur est assis sur le premier véhicule de type fauteuil roulant, il peut actionner l'organe de manœuvre et ainsi atteler ou dételer ce premier véhicule vis-à-vis du second véhicule qui est ici une trottinette à propulsion motorisée.

L'actionnement de cet organe de manœuvre 44 entraîne le déplacement de chacun des crochets 42, 42b de sa première position vers sa deuxième position où il libère la barre 21.

Pour cela, cet organe de manœuvre 44 est ici directement fixé aux crochets 42, 42b et il comporte un levier forçant la rotation de ces crochets à l'encontre d'un couple de rappel élastique généré par les organes élastiques 45, 45b

Afin que les premier et second crochets 42, 42b pivotent ensemble, ils sont assujettis entre eux via une barre de liaison 46.

Pour la compréhension de l'invention, moyen élastique de rappel ou organe élastique de rappel ou dispositif élastique de rappel désignent par exemple un ou plusieurs ressorts hélicoïdaux, un ou plusieurs ressorts à lame, un ou plusieurs ressorts de torsion, une ou plusieurs pièces élastiquement déformables ainsi que toute combinaison de ces moyens élastiques particuliers.

Afin d'éviter un risque de déplacement accidentel des béquilles vers leurs positions de rangement, alors que le dispositif d'attelage 0 est toujours en configuration dételée, il est également proposé un verrouillage des béquilles en position d'utilisation.

A cette fin, le premier mécanisme de commande 6 comporte un premier verrou 61 mobile entre une position de verrouillage de ladite première béquille 5 et une position de libération de ladite première béquille 5.

Ce premier verrou 61 est agencé pour maintenir ladite première béquille 5 dans sa position d'utilisation lorsque ce premier verrou 61 se trouve dans la position de verrouillage de ladite première béquille 5.

La première béquille 5 et le premier verrou 61 sont conformés pour que le passage du premier verrou 61 de sa position de libération vers sa position de verrouillage soit possible uniquement lorsque cette première béquille 5 se trouve dans sa position d'utilisation.

Le premier mécanisme de commande 6 comporte aussi un premier dispositif élastique de rappel, en l'occurrence un ressort 62, agencé pour rappeler le premier verrou 61 de sa position de libération vers sa position de verrouillage.

Le premier verrou 61 comporte au moins un premier bras 61a pivotant autour d'un axe de rotation R1 de ce premier bras 61a.

Ce bras 61a comporte une première encoche 61b venant buter contre un ergot 51 de la première béquille 5 lorsque cette première béquille 5 se trouve dans sa position d'utilisation et que le premier verrou se trouve dans sa position de verrouillage verrouillant ainsi la première béquille 5 dans cette position d'utilisation. Le dispositif élastique de rappel 62 agit à une première extrémité du bras 61a et l'encoche 61b se trouve entre l'axe de rotation R1 et cette première extrémité du premier bras 61a. On a ainsi une démultiplication des efforts de verrouillage exercés entre le bras 61a et l'ergot 51.

Comme indiqué précédemment, le mécanisme d'attelage 40 comporte une surface de guidage 40a pour définir une trajectoire T1 de la première pièce d'attelage externe 21 par rapport au mécanisme de d'attelage 40 lors du déplacement de cette première pièce d'attelage externe jusqu'à un premier espace de réception 43 de cette première pièce d'attelage externe 21 qui est occupé par cette première pièce externe 21 lorsque le dispositif d'attelage 0 se trouve dans sa configuration attelée.

Une portion 61c dudit premier verrou 61 en position de verrouillage se trouve sur cette trajectoire T1 de la première pièce externe 21 de manière à ce que lors du déplacement de la première pièce d'attelage externe 21 contre cette surface de guidage 40a en suivant ladite trajectoire T1 de la première pièce externe vers ledit premier espace de réception 43, cette pièce externe 21 vient en contact contre ladite portion 61c du premier verrou 61 pour déplacer ce premier verrou 61 de sa position de verrouillage vers sa position de libération.

Ainsi, lors du déplacement de la première pièce externe 21 contre cette surface de guidage 40a en suivant ladite trajectoire T1 de la première pièce externe vers ledit premier espace de réception 43, cette pièce externe 21 vient en contact contre ladite portion 61c du premier verrou 61 pour déplacer ce premier verrou 61 de sa position de verrouillage vers sa position de libération. On libère ainsi la première béquille 5 pour pouvoir la déplacer vers sa position de rangement.

Le mécanisme de commande 6 de déplacement de la première béquille 5 comporte aussi une surface d'actionnement 5X disposée pour se trouver sur la trajectoire T1 de la première pièce externe 21 définie par ladite surface de guidage 40a au moins tant que ladite première béquille 5 se trouve dans sa position d'utilisation.

Cette surface d'actionnement 5X est fonctionnellement reliée à ladite première béquille 5 de manière à ce que sous l'effet d'une poussée exercée sur la surface d'actionnement 5X par ladite première pièce externe 21 se déplaçant le long de la trajectoire T1 vers ledit premier espace de réception 43, cette surface d'actionnement se déplace et entraine avec elle le déplacement de ladite première béquille 5 de sa position d'utilisation jusqu'à sa position de rangement.

Comme on le voit sur les figures 4a à 4c, cette surface d'actionnement 5X est portée par ladite première béquille 5.

Plus spécifiquement, la béquille 5 en position d'utilisation comporte une partie inférieure destinée à venir en appui sur le sol supportant portant le second véhicule 200 et une partie supérieure portant ladite surface d'actionnement 5X.

Cette partie supérieure de la béquille 5 en position d'utilisation s'étend d'un côté d'un plan de guidage P1 dans lequel s'étend ladite surface de guidage 40a et la partie inférieure de la béquille s'étendant alors de l'autre côté de ce plan de guidage P1.

Cette surface d'actionnement 5X est disposée de manière à être entre ladite portion 61c du premier verrou 61 et ledit premier espace de réception 43 au moins tant que la première béquille 5 se trouve dans sa position d'utilisation.

Ainsi, lors du déplacement de la première pièce externe 21 le long de la trajectoire T1 vers ledit premier espace de réception 43, cette première pièce externe 21 entre d'abord en contact avec la portion 61c du premier verrou 61 pour déverrouiller la béquille puis cette première pièce externe 21 entre en contact avec la surface d'actionnement 5X pour la pousser et ainsi commander le déplacement de la première béquille 5 de sa position d'utilisation vers sa position de rangement.

Une fois que la première pièce externe 21 est arrivée dans le premier espace de réception 43, la béquille est en position de rangement et la première pièce externe 21 peut être attelée au mécanisme d'attelage 40 pour ainsi attacher les premier et second véhicules 100, 200 l'un à l'autre via le dispositif d'attelage 0.

Dans un mode de réalisation particulier non représenté, il pourrait être utile que le mécanisme d'attelage 40 comporte une commande de déverrouillage forcé de chacune des béquilles afin de commander le déplacement de chacune de ces béquilles vers leurs positions de rangement respective, y compris lorsque le dispositif d'attelage est en configuration dételée.

Ceci permet d'utiliser la trottinette pour se déplacer alors que celle-ci est dételée du fauteuil.

## Revendications

1. Dispositif d'attelage (0) pour atteler entre eux des premier et second véhicules (100, 200), le dispositif d'attelage (0) comprenant au moins un mécanisme d'attelage (40) et au moins une première pièce d'attelage (21) externe au mécanisme d'attelage (40), le dispositif d'attelage (0) étant agencé pour sélectivement adopter une configuration attelée et une configuration dételée, dans la configuration attelée le mécanisme d'attelage (40) est relié mécaniquement à ladite première pièce d'attelage externe (21) et interdit l'écartement de cette première pièce d'attelage externe (21) vis-à-vis du mécanisme d'attelage (40), dans la configuration dételée, la première pièce d'attelage externe (21) est éloignée dudit mécanisme d'attelage (40), le dispositif d'attelage (0) comportant également une première béquille (5) mobile par rapport au mécanisme d'attelage (40) entre une position d'utilisation de la première béquille (5) et une position de rangement de la première béquille (5), **caractérisé en ce que** le dispositif d'attelage (0) comporte un premier mécanisme de commande de déplacement (6) de la première béquille (5) agencé pour commander le déplacement de cette première béquille (5) de sa position d'utilisation vers sa position de rangement lorsque le dispositif d'attelage (0) passe de sa configuration dételée vers sa configuration attelée.

2. Dispositif d'attelage (0) selon la revendication 1, dans lequel le premier mécanisme de commande de déplacement (6) de la première béquille (5) est également agencé pour commander le déplacement de la première béquille (5) de sa position de rangement vers sa position d'utilisation lorsque le dispositif d'attelage (0) passe de sa configuration attelée vers sa configuration dételée.

3. Dispositif d'attelage (0) selon l'une quelconque des revendications 1 ou 2, dans lequel le premier mécanisme de commande (6) comporte un premier verrou (61) mobile entre une position de verrouillage de ladite première béquille (5) et une position de libération de ladite première béquille (5), ce premier verrou (61) étant agencé pour maintenir ladite première béquille (5) dans sa position d'utilisation lorsque ce premier verrou (61) se trouve dans la position de verrouillage de ladite première béquille (5).

4. Dispositif d'attelage (0) selon la revendication 3, dans lequel la première béquille (5) et le premier verrou (61) sont conformés pour que le passage du premier verrou de sa position de libération vers sa position de verrouillage soit possible uniquement lorsque cette première béquille (5) se trouve dans sa position d'utilisation.

5. Dispositif d'attelage selon l'une quelconque des revendications 3 ou 4, dans lequel le premier mécanisme de commande (6) comporte un premier dispositif élastique de rappel (62) agencé pour rappeler le premier verrou (61) de sa position de libération vers sa position de verrouillage.

6. Dispositif d'attelage (0) selon l'une quelconque des revendications 3 à 5, dans lequel le premier verrou (61) comporte au moins un premier bras (61a) pivotant autour d'un axe de rotation (R1) de ce premier bras (61a), ce bras (61a) comportant une première encoche (61b) venant buter contre un ergot (51) de la première béquille (5) lorsque cette première béquille (5) se trouve dans sa position d'utilisation et que le premier verrou se trouve dans sa position de verrouillage verrouillant ainsi la première béquille (5) dans sa position d'utilisation.

7. Dispositif d'attelage (0) selon l'une quelconque des revendications 3 à 6, comportant au moins une surface de guidage (40a) pour définir une trajectoire (T1) de la première pièce d'attelage externe (21) par rapport au mécanisme de d'attelage (40) lors du déplacement de cette première pièce d'attelage externe jusqu'à un premier espace de réception (43) de cette première pièce d'attelage externe (21) qui est occupé par cette première pièce d'attelage externe (21) lorsque le dispositif d'attelage (0) se trouve dans sa configuration attelée, une portion (61c) dudit premier verrou (61) en position de verrouillage se trouvant sur cette trajectoire (T1) de la première pièce d'attelage externe (21) de manière à ce que lors du déplacement de la première pièce d'attelage externe (21) contre cette surface de guidage (40a) en suivant ladite trajectoire (T1) de la première pièce d'attelage externe (21) vers ledit premier espace de réception (43), cette pièce externe (21) vient en contact contre ladite portion (61c) du premier verrou (61) pour déplacer ce premier verrou (61) de sa position de verrouillage vers sa position de libération.

8. Dispositif d'attelage selon la revendication 7, dans lequel ledit mécanisme de commande (6) de déplacement de la première béquille (5) comporte une surface d'actionnement (5X) disposée pour se trouver sur la trajectoire (T1) de la première pièce d'attelage externe (21) définie par ladite surface de guidage (40a) au moins tant que ladite première béquille (5) se trouve dans sa position d'utilisation, cette surface d'actionnement (5X) étant fonctionnellement reliée à ladite première béquille de manière à ce que sous l'effet d'une poussée exercée sur la surface d'actionnement (5X) par ladite première pièce d'attelage externe (21) se déplaçant le long de la trajectoire (T1) vers ledit premier espace de réception (43), cette surface d'actionnement se déplace et entraine avec elle le déplacement de ladite première béquille (5) de sa position d'utilisation jusqu'à sa position de rangement.

9. Dispositif d'attelage selon la revendication 8, dans lequel ladite surface d'actionnement (5X) est portée par ladite première béquille (5).

10. Dispositif d'attelage selon l'une quelconque des revendications 8 ou 9, dans lequel ladite surface d'actionnement (5X) est disposée de manière à être entre ladite portion (61c) du premier verrou (61) et ledit premier espace de réception (43) au moins tant que la première béquille (5) se trouve dans sa position d'utilisation.

11. Dispositif d'attelage selon l'une quelconque des revendications 1 à 10, dans lequel le premier mécanisme de commande de déplacement (6) de la première béquille (5) comporte un moyen élastique de rappel (63) de la première béquille (5) de sa position de rangement vers sa position d'utilisation.

12. Dispositif d'attelage (0) selon l'une quelconque des revendications 1 à 11, dans lequel la première béquille (5) est constituée d'une tige montée pivotante par rapport à une platine (64) qui est assujettie au mécanisme d'attelage.

13. Dispositif d'attelage selon l'une quelconque des revendications 1 à 12, dans lequel le mécanisme d'attelage (40) comporte une première butée (41) et un premier crochet (42) monté à rotation autour d'un premier axe pivot (Pvt40) du mécanisme d'attelage (40) entre une première position de pivotement atteinte au moins lorsque le dispositif d'attelage (0) est dans sa configuration attelée et une seconde position de pivotement, dans la première position de pivotement du premier crochet (42), ce premier crochet (42) étant alors positionné pour pouvoir bloquer ladite première pièce d'attelage externe (21) entre le premier crochet (42) et la première butée (41) et dans la seconde position de pivotement du premier crochet (42), ce premier crochet (42) étant alors positionné pour autoriser une translation libre de ladite première pièce d'attelage externe (21) par rapport au mécanisme d'attelage (40) en s'écartant de ladite première butée (41).

14. Dispositif d'attelage (0) selon la revendication 13, dans lequel le mécanisme d'attelage (40) comporte une seconde butée (41b) située à distance de la première butée (41) et un second crochet (42b) situé à distance du premier crochet (42), ce second crochet (42b) étant monté à rotation autour d'un second axe pivot (Pvt40b) du mécanisme d'attelage (40) entre une première position de pivotement de ce second crochet (42b) atteinte au moins lorsque le dispositif d'attelage (0) est dans sa configuration attelée et une seconde position de pivotement de ce second crochet (42b), dans sa première position de pivotement ce second crochet (42b) étant positionné pour pouvoir bloquer ladite première pièce d'attelage externe (21) entre le second crochet (42b) et la seconde butée (41b) et dans la seconde position de pivotement du second crochet (42b), ce second crochet (42b) étant alors positionné pour autoriser une translation libre de ladite première pièce d'attelage externe (21) par rapport au mécanisme d'attelage (40) en s'écartant de ladite seconde butée (41b).

15. Dispositif d'attelage (0) selon l'une quelconque des revendications 1 à 14, dans lequel ladite première pièce d'attelage externe (21) est en forme de barre, le mécanisme d'attelage (40) et cette pièce externe (21) étant conformés de manière que lorsque le mécanisme d'attelage (40) est dans la configuration attelée et est relié mécaniquement à ladite première pièce d'attelage externe (21), cette première pièce en forme de barre (21) peut alors pivoter par rapport au mécanisme d'attelage (40) suivant un axe de pivotement s'étendant selon la longueur de cette barre.

16. Dispositif d'attelage selon l'une quelconque des revendications 13 ou 14, dans lequel le premier mécanisme de commande de déplacement (6) de la première béquille (5) comporte un organe de manœuvre (44) agencé pour commander le passage du premier crochet (42) de sa première position vers sa deuxième position.

17. Dispositif d'attelage selon l'une quelconque des revendications 1 à 15, dans lequel le mécanisme d'attelage (40) comporte un organe de manœuvre (44) agencé pour commander le passage de ladite configuration attelée vers ladite configuration dételée.

18. Ensemble comportant un second véhicule (200) et un dispositif d'attelage (0) selon l'une quelconque des revendications 1 à 17, le mécanisme d'attelage (40) étant porté par ledit second véhicule (200) de manière que :
- lorsque le dispositif d'attelage (0) est dans sa configuration dételée, ce second véhicule (200) est alors maintenu en position stable par rapport à un sol portant ce second véhicule (200) à l'aide de ladite première béquille (5) qui est portée par ce second véhicule et qui se trouve dans sa position d'utilisation, en appui sur le sol ; et que
- lorsque le dispositif d'attelage (0) est dans sa configuration attelée, ce second véhicule (200) est alors attelé à ladite première pièce d'attelage externe (21) et ladite première béquille (5) se trouvant alors dans sa position de rangement où elle est éloignée du sol.

19. Ensemble selon la revendication 18, comportant en outre un premier véhicule (100) comportant au moins une paire de roues arrières (101, 102) et au moins une roue avant (103), ladite première pièce externe étant fixée sur ce premier véhicule (100).

## Patentansprüche

1. Kupplungsvorrichtung (0), welche dazu dient, ein erstes und ein zweites Fahrzeug (100, 200) miteinander zu kuppeln, wobei die Kupplungsvorrichtung (0) zumindest einen Kupplungsmechanismus (40) und zumindest ein außerhalb des Kupplungsmechanismus (40) liegendes, erstes Kupplungsteil (21) umfasst, wobei die Kupplungsvorrichtung (0) dafür ausgelegt ist, wahlweise eine angekuppelte Konfiguration und eine abgekuppelte Konfiguration anzunehmen: in der angekuppelten Konfiguration ist der Kupplungsmechanismus (40) mit dem externen ersten Kupplungsteil (21) mechanisch verbunden und verhindert, dass sich dieses externe erste Kupplungsteil (21) von dem Kupplungsmechanismus (40) löst; in der abgekuppelten Konfiguration ist dieses externe erste Kupplungsteil (21) von dem Kupplungsmechanismus (40) gelöst, wobei die Kupplungsvorrichtung (0) ferner einen ersten Ständer (5) umfasst, der in Bezug auf den Kupplungsmechanismus (40) zwischen einer Einsatzstellung des ersten Ständers (5) und einer Verstauungsstellung des ersten Ständers (5) beweglich ist, **dadurch gekennzeichnet, dass** die Kupplungsvorrichtung (0) einen ersten Steuermechanismus (6) zur Bewegungssteuerung des ersten Ständers (5) enthält, der dafür ausgelegt ist, die Verfahrbewegung des ersten Ständers (5) von seiner Einsatzstellung in seine Verstauungsstellung zu steuern, während sich die Kupplungsvorrichtung (0) von ihrer abgekuppelten Konfiguration in ihre angekuppelte Konfiguration bewegt.

2. Kupplungsvorrichtung (0) nach Anspruch 1, wobei der erste Steuermechanismus (6) zur Bewegungssteuerung des ersten Ständers (5) ferner dafür ausgelegt ist, die Verfahrbewegung des ersten Ständers (5) von seiner Verstauungsstellung in seine Einsatzstellung zu steuern, während sich die Kupplungsvorrichtung (0) von ihrer angekuppelten Konfiguration in ihre abgekuppelte Konfiguration bewegt.

3. Kupplungsvorrichtung (0) nach einem der Ansprüche 1 oder 2, wobei der erste Steuermechanismus (6) einen ersten Riegel (61) enthält, der zwischen einer Verriegelungsposition des ersten Ständers (5) und einer Freigabeposition des ersten Ständers (5) beweglich ist, wobei dieser erste Riegel (61) dafür ausgelegt ist, den ersten Ständer (5) in seiner Einsatzstellung zu halten, wenn sich der erste Riegel (61) in der Verriegelungsposition des ersten Ständers (5) befindet.

4. Kupplungsvorrichtung (0) nach Anspruch 3, wobei der erste Ständer (5) und der erste Riegel (61) derart ausgebildet sind, dass der erste Riegel erst dann von seiner Freigabeposition in seine Verriegelungsposition bewegt werden kann, wenn sich der erste Ständer (5) in seiner Einsatzstellung befindet.

5. Kupplungsvorrichtung nach einem der Ansprüche 3 oder 4, wobei der erste Steuermechanismus (6) eine erste elastische Rückstelleinrichtung (62) enthält, die dafür ausgelegt ist, den ersten Riegel (61) von seiner Freigabeposition in seine Verriegelungsposition zurückzustellen.

6. Kupplungsvorrichtung (0) nach einem der Ansprüche 3 bis 5, wobei der erste Riegel (61) zumindest einen ersten Arm (61a) enthält, der um eine Drehachse (R1) dieses ersten Arms (61a) herum schwenkbar ist, wobei der Arm (61a) eine erste Einkerbung (61b) enthält, die auf eine Rastnase (51) des ersten Ständers auftrifft, wenn sich der erste Ständer (5) in seiner Einsatzstellung und der erste Riegel in seiner Verriegelungsposition befinden, wodurch der erste Ständer (5) in seiner Einsatzstellung verriegelt wird.

7. Kupplungsvorrichtung (0) nach einem der Ansprüche 3 bis 6, enthaltend zumindest eine Führungsfläche (40a), die eine Laufbahn (T1) des externen ersten Kupplungsteils (21) in Bezug auf die Kupplungsvorrichtung (40) definiert, während sich dieses externe erste Kupplungsteil bis zu einem ersten Aufnahmeraum (43) zur Aufnahme des externen ersten Kupplungsteils (21) hin bewegt, in welchem das externe erste Kupplungsteil (21) aufgenommen ist, wenn sich die Kupplungsvorrichtung (0) in ihrer angekuppelten Konfiguration befindet, wobei sich ein Abschnitt (61c) des ersten Riegels (61) in Verriegelungsposition auf der Laufbahn (T1) des externen ersten Kupplungsteils (21) befindet, sodass, wenn sich das externe erste Kupplungsteil (21) auf der Führungsfläche (40a) entlang der Laufbahn (T1) des externen ersten Kupplungsteils (21) zu dem ersten Aufnahmeraum (43) hin bewegt, das externe Teil (21) mit diesem Abschnitt (61c) des ersten Riegels (61) in Kontakt tritt und dadurch den ersten Riegel (61) von seiner Verriegelungsposition in seine Freigabeposition bewegt.

8. Kupplungsvorrichtung nach Anspruch 7, wobei der Steuermechanismus (6) zur Bewegungssteuerung des ersten Ständers (5) eine Betätigungsfläche (5X) enthält, welche, zumindest solange sich der erste Ständer (5) in seiner Einsatzstellung befindet, in der durch die Führungsfläche (40a) definierten Laufbahn (T1) des externen ersten Kupplungsteils (21) gelegen ist, wobei besagte Betätigungsfläche (5X) derart mit dem ersten Ständer in Wirkverbindung steht, dass unter der Einwirkung einer Schubkraft, die durch das externe erste Kupplungsteil (21) auf die Betätigungsfläche (5X) ausgeübt wird, wenn ersteres sich entlang der Laufbahn (T1) zu dem ersten Aufnahmeraum (43) hin bewegt, die Betätigungsfläche mitbewegt wird, wodurch der erste Ständer (5) von seiner Einsatzstellung in seine Verstauungsstellung übergeht.

9. Kupplungsvorrichtung nach Anspruch 8, wobei die Betätigungsfläche (5X) durch den ersten Ständer (5) getragen wird.

10. Kupplungsvorrichtung nach einem der Ansprüche 8 oder 9, wobei die Betätigungsfläche (5X) derart angeordnet ist, dass sie, zumindest solange sich der erste Ständer (5) in seiner Einsatzstellung befindet, zwischen dem Abschnitt (61c) des ersten Riegels (61) und dem ersten Aufnahmeraum (43) liegt.

11. Kupplungsvorrichtung nach einem der Ansprüche 1 bis 10, wobei der erste Steuermechanismus (6) zur Bewegungssteuerung des ersten Ständers (5) ein elastisches Rückstellmittel (63) enthält, welches dazu dient, den ersten Ständer (5) von seiner Verstauungsstellung in seine Einsatzstellung zurückzustellen.

12. Kupplungsvorrichtung (0) nach einem der Ansprüche 1 bis 11, wobei der erste Ständer (5) aus einem Stab besteht, der in Bezug auf eine an dem Kupplungsmechanismus befestigte Platte (64) schwenkbar montiert ist.

13. Kupplungsvorrichtung nach einem der Ansprüche 1 bis 12, wobei der Kupplungsmechanismus (40) einen ersten Anschlag (41) und einen ersten Haken (42) enthält, der um eine Schwenkachse (Pvt40) des Kupplungsmechanismus (40) herum zwischen einer ersten Schwenkposition, welche zumindest dann erreicht ist, wenn sich die Kupplungsvorrichtung (0) in ihrer angekuppelten Konfiguration befindet, und einer zweiten Schwenkposition drehbar montiert ist, wobei, wenn sich der erste Haken (42) in der ersten Schwenkposition befindet, der erste Haken (42) derart angeordnet ist, dass das externe erste Kupplungsteil (21) zwischen dem ersten Haken (42) und dem ersten Anschlag (41) blockiert wird, und wenn sich der erste Haken (42) in der zweiten Schwenkposition befindet, der erste Haken (42) derart angeordnet ist, dass er eine freie Translation des externen ersten Kupplungsteils (21) in Bezug auf den Kupplungsmechanismus (40) zulässt, indem er sich von dem ersten Anschlag (41) löst.

14. Kupplungsvorrichtung (0) nach Anspruch 13, wobei der Kupplungsmechanismus (40) einen von dem ersten Anschlag (41) beabstandeten, zweiten Anschlag (41b) und einen von dem ersten Haken (42) beabstandeten, zweiten Haken (42b) enthält, wobei der zweite Haken (42b) um eine zweite Schwenkachse (Pvt40b) des Kupplungsmechanismus (40) herum zwischen einer ersten Schwenkposition dieses zweiten Hakens (42b), welche zumindest dann erreicht ist, wenn sich die Kupplungsvorrichtung (0) in ihrer angekuppelten Konfiguration befindet, und einer zweiten Schwenkposition dieses zweiten Hakens (42b), drehbar montiert ist, wobei der zweite Haken (42b) in seiner ersten Schwenkposition derart angeordnet ist, dass er das externe erste Kupplungsteil (21) zwischen dem zweiten Haken (42b) und dem zweiten Anschlag (41b) blockiert, und wobei, wenn sich der zweiten Haken (42b) in der zweiten Schwenkposition befindet, der zweite Haken (42b) derart angeordnet ist, dass er eine freie Translation des externen ersten Kupplungsteils (21) in Bezug auf den Kupplungsmechanismus (40) zulässt, indem er sich von dem zweiten Anschlag (41b) löst.

15. Kupplungsvorrichtung (0) nach einem der Ansprüche 1 bis 14, wobei das externe erste Kupplungsteil (21) stangenförmig ausgebildet ist, wobei der Kupplungsmechanismus (40) und das externe Teil (21) derart ausgebildet sind, dass, wenn sich der Kupplungsmechanismus (40) in der angekuppelten Konfiguration befindet und mit dem externen ersten Kupplungsteil (21) mechanisch verbunden ist, dieses stangenförmige erste Teil (21) in Bezug auf den Kupplungsmechanismus (40) um eine sich entlang der Länge der Stange erstreckenden Schwenkachse herum schwenkbar ist.

16. Kupplungsvorrichtung nach einem der Ansprüche 13 oder 14, wobei der erste Steuermechanismus (6) zur Bewegungssteuerung des ersten Ständers (5) ein Bedienteil (44) enthält, welches dafür ausgelegt ist, den Übergang des ersten Hakens (42) von seiner ersten Position in seine zweite Position zu steuern.

17. Kupplungsvorrichtung nach einem der Ansprüche 1 bis 15, wobei der Kupplungsmechanismus (40) ein Bedienteil (44) enthält, welches dafür ausgelegt ist, den Übergang von der angekuppelten Konfiguration in die abgekuppelte Konfiguration zu steuern.

18. Anordnung enthaltend ein zweites Fahrzeug (200) und eine Kupplungsvorrichtung (0) nach einem der Ansprüche 1 bis 17, wobei der Kupplungsmechanismus (40) von dem zweiten Fahrzeug (200) derart getragen wird, dass:
- wenn sich die Kupplungsvorrichtung (0) in ihrer abgekuppelten Konfiguration befindet, das zweite Fahrzeug (200) in einer stabilen Position in Bezug auf einen dieses zweite Fahrzeug (200) tragenden Boden gehalten wird, und zwar mit Hilfe des von dem zweiten Fahrzeug getragenen, ersten Ständers (5), der sich in seiner Einsatzstellung befindet, in welcher er auf dem Boden abgestützt ist; und dass
- wenn sich die Kupplungsvorrichtung (0) in ihrer angekuppelten Konfiguration befindet, das zweite Fahrzeug (200) an dem externen ersten Kupplungsteil (21) gekuppelt ist und sich der erste Ständer (5) in seiner Verstauungsstellung befindet, in welcher er von dem Boden beabstandet ist.

19. Anordnung nach Anspruch 18, ferner enthaltend ein erstes Fahrzeug (100) mit zumindest einem Paar Hinterräder (101, 102) und mit zumindest einem Vorderrad (103), wobei das externe erste Teil an dem ersten Fahrzeug (100) befestigt ist.

## Claims

1. Coupling device (0) for coupling together first and second vehicles (100, 200), the coupling device (0) comprising at least one coupling mechanism (40) and at least one first coupling part (21) external to the coupling mechanism (40), the coupling device (0) being arranged to selectively adopt a coupled configuration and an uncoupled configuration, in the coupled configuration the coupling mechanism (40) is mechanically connected to said first external coupling part (21) and inhibits this first external coupling part (21) to move away from the coupling mechanism (40), in the uncoupled configuration, the first external coupling part (21) is distant from said coupling mechanism (40), the coupling device (0) also comprising a first leg (5) movable with respect to the coupling mechanism (40) between a use position of the first leg (5) and a storage position of the first leg (5), **characterised in that** the coupling device (0) comprises a first movement control mechanism (6) of the first leg (5) arranged to control the movement of this first leg (5) from its use position to its storage position when the coupling device (0) passes from its uncoupled configuration to its coupled configuration.

2. The coupling device (0) according to claim 1, wherein the first movement control mechanism (6) of the first leg (5) is also arranged to control the movement of the first leg (5) from its use position to its storage position when the coupling device (0) passes from its coupled configuration to its uncoupled configuration.

3. The coupling device (0) according to any one of claims 1 or 2, wherein the first control mechanism (6) comprises a first lock (61) movable between a position for locking said first leg (5) and a position for releasing said first leg (5), said first lock (61) being arranged to hold said first leg (5) in its use position when said first lock (61) is in the position for locking said first leg (5).

4. The coupling device (0) according to claim 3, wherein the first leg (5) and the first lock (61) are configured so that the first lock can be moved from its release position to its locking position only when this first leg (5) is in its use position.

5. The coupling device according to any one of claims 3 or 4, wherein the first control mechanism (6) comprises a first elastic return device (62) arranged to return the first lock (61) from its release position to its locking position.

6. The coupling device (0) according to any one of claims 3 to 5, wherein the first lock (61) comprises at least one first arm (61a) pivoting about an axis of rotation (R1) of this first arm (61a), this arm (61a) comprising a first notch (61b) abutting against a lug (51) of the first leg (5) when this first leg (5) is in its use position and the first lock is in its locking position, thus locking the first leg (5) in its use position.

7. The coupling device (0) according to any one of Claims 3 to 6, comprising at least one guide surface (40a) for defining a path (T1) of the first external coupling part (21) with respect to the coupling mechanism (40) during the movement of this first external coupling part to a first receiving space (43) of this first external coupling part (21) which is occupied by this first external coupling part (21) when the coupling device (0) is in its coupled configuration, a portion (61c) of said first lock (61) in the locking position being on this path (T1) of the first external coupling part (21) such that during the movement of the first external coupling part (21) against this guide surface (40a), following said path (T1) of the first external coupling part (21) towards said first receiving space (43), this external part (21) comes into contact against said portion (61c) of the first lock (61) to move this first lock (61) from its locking position to its release position.

8. The coupling device according to claim 7, wherein said control mechanism (6) for moving the first leg (5) comprises an actuation surface (5X) arranged to be on the path (T1) of the first external coupling part (21) defined by said guide surface (40a) at least while said first leg (5) is in its use position, said actuation surface (5X) being operatively connected to said first leg such that under the effect of a thrust exerted on the actuation surface (5X) by said first external coupling part (21) moving along the path (T1) towards said first receiving space (43), said actuation surface moves and causes said first leg (5) to move therewith from its use position to its storage position.

9. The coupling device according to claim 8, wherein said actuation surface (5X) is carried by said first leg (5).

10. The coupling device according to any one of claims 8 or 9, wherein said actuation surface (5X) is disposed so as to be between said portion (61c) of the first lock (61) and said first receiving space (43) at least as long as the first leg (5) is in its use position.

11. The coupling device according to any one of claims 1 to 10, wherein the first movement control mechanism (6) of the first leg (5) comprises elastic return means (63) for returning the first leg (5) from its storage position to its use position.

12. The coupling device (0) according to any one of Claims 1 to 11, in which the first leg (5) consists of a rod mounted pivotably with respect to a plate (64) which is secured to the coupling mechanism.

13. The coupling device according to any one of claims 1 to 12, wherein the coupling mechanism (40) comprises a first abutment (41) and a first hook (42) mounted so as to rotate about a first pivot axis (Pvt40) of the coupling mechanism (40) between a first pivoting position reached at least when the coupling device (0) is in its coupled configuration and a second pivoting position, in the first pivoting position of the first hook (42), this first hook (42) then being positioned so as to be able to lock said first external coupling part (21) between the first hook (42) and the first abutment (41) and in the second pivoting position of the first hook (42), this first hook (42) then being positioned so as to allow a free translation of said first external coupling part (21) with respect to the coupling mechanism (40) by moving away from said first abutment (41).

14. The coupling device (0) according to claim 13, wherein the coupling mechanism (40) comprises a second abutment (41b) situated at a distance from the first abutment (41) and a second hook (42b) situated at a distance from the first hook (42), this second hook (42b) being mounted to rotate about a second pivot axis (Pvt40b) of the coupling mechanism (40) between a first pivoting position of this second hook (42b) reached at least when the coupling device (0) is in its coupled configuration and a second pivoting position of this second hook (42b), in its first pivoting position, this second hook (42b) being positioned to be able to lock said first external coupling part (21) between the second hook (42b) and the second abutment (41b) and in the second pivoting position of the second hook (42b), this second hook (42b) then being positioned to allow free translation of said first external coupling part (21) relative to the coupling mechanism (40) by moving away from said second abutment (41b).

15. The coupling device (0) according to any one of claims 1 to 14, wherein said first external coupling part (21) is in the form of a bar, the coupling mechanism (40) and said external part (21) being shaped in such a way that when the coupling mechanism (40) is in the coupled configuration and is mechanically connected to said first external coupling part (21), said first bar-shaped part (21) can then pivot relative to the coupling mechanism (40) about a pivot axis extending along the length of said bar.

16. The coupling device according to any one of claims 13 or 14, wherein the first movement control mechanism (6) of the first leg (5) includes a manoeuvring member (44) arranged to control the passage of the first hook (42) from its first position to its second position.

17. The coupling device according to any one of claims 1 to 15, wherein the coupling mechanism (40) comprises a manoeuvring member (44) arranged to control the passage from said coupled configuration to said uncoupled configuration.

18. An assembly comprising a second vehicle (200) and a coupling device (0) according to any one of claims 1 to 17, the coupling mechanism (40) being carried by said second vehicle (200) so that:
- when the coupling device (0) is in its uncoupled configuration, this second vehicle (200) is then held in a stable position relative to a ground carrying this second vehicle (200) by means of said first leg (5) which is carried by this second vehicle and which is in its use position, resting on the ground; and
- when the coupling device (0) is in its coupled configuration, this second vehicle (200) is then coupled to said first external coupling part (21) and said first leg (5) is then in its storage position where it is move away from the ground.

19. The assembly according to claim 18, further including a first vehicle (100) including at least one pair of rear wheels (101, 102) and at least one front wheel (103), said first external part being fixed to said first vehicle (100).
